# EUROPÄISCHE PATENTSCHRIFT

(11) **EP 0 415 137 B1**
(45) Veröffentlichungstag und Bekanntmachung des Hinweises auf die Patenterteilung: **20.04.1994**
(21) Anmeldenummer: 90115125.8
(22) Anmeldetag: 07.08.1990
(51) Int. Cl.: B29C 51/42, B29B 13/02

(54) **Tiefziehmaschine mit einer Vorwärmvorrichtung**
Deep-drawing machine with preheating device
Machine à emboutissage profond avec dispositif de préchauffage

(30) Priorität: 07.08.1989 DE 3926089
(43) Veröffentlichungstag der Anmeldung: 06.03.1991
(73) Patentinhaber: Hassia Verpackungsmaschinen GmbH, D-63689 Ranstadt (DE)
(72) Erfinder: Walter, Kurt, D-6475 Glauburg (DE)
(74) Vertreter: Wolf, Günter, Dipl.-Ing.

(56) Entgegenhaltungen:
- DE-A- 2 544 042
- DE-C- 3 311 988

## Beschreibung

Die Erfindung betrifft eine Tiefziehmaschine mit einer folienbahneinlaufseitigen Vorwärmvorrichtung aus übereinander angeordneten, durchmessergleichen Heizwalzen, deren Drehantrieb synchron auf das getaktete Transportelement der Folienbahn abgestimmt ist.

Eine derartige Tiefzieh- bzw. Thermoformmaschine mit einer Vorheizeinrichtung ist nach der DE-OS 25 44 042 bekannt, in der erwähnt ist, daβ es zweckmäßig sei, auch für das Folienbahnmaterial in zyklischer Weise eine Verweilzeit bezüglich dessen Kontakt mit den Vorheizwalzen vorzusehen, da die Verformungsmaschine auf einer zyklischen Grundlage arbeite. Dies wird auch in der insoweit einschlägigen DE-PS 33 11 988 berücksichtigt, deren diesbezüglicher und insoweit präziserer Vorschlag darin besteht, mittels einer den Heizwalzen nachgeschalteten, kontinuierlich angetriebenen Transportwalze und einer abtastbaren Bahnvorratsschlaufe das Vorwärm- und Förderproblem zu lösen, womit allerdings ein größerer Raumbedarf sowohl bezüglich der Höhe als auch der Länge im Bereich der Vorwärmvorrichtung und der Nachteil einer gewissen Abkühlung des vorgewärmten Bahnmaterials in Kauf genommen werden muß.

Ausgehend vom Gegenstand der DE-OS 25 44 042 liegt der Erfindung die Aufgabe zugrunde, eine Tiefziehmaschine der eingangs genannten Art hinsichtlich ihrer Vorwärmvorrichtung dahingehend auszubilden und zu verbessern, dar eine exakt abgestimmte und übereinstimmende Durchlaufgeschwindigkeit der Folienbahn durch einerseits die Vorwärmvorrichtung und andererseits, in Abhängigkeit von dieser, durch die Tiefziehmaschine erzielbar sein soll, und zwar mit der weiteren Maßgabe, eine abkühlgefährdete und raumbeanspruchende Bahnvorratsvorschlaufe zu vermeiden.

Diese Aufgabe ist mit einer Tiefziehmaschine der eingangs genannten Art nach der Erfindung durch die im Kennzeichen des Hauptanspruches angeführten Merkmale gelöst. Vorteilhafte Weiterbildungen und praktische Ausführungsformen ergeben sich nach den Unteransprüchen.

Durch diese erfindungsgemäße Ausbildung ist bei unmittelbarer und raumsparender Anordnung der Vorheizeinrichtung vor dem Einlauf in die Tiefziehmaschine eine abkühlgefährdete und die Folienbahn nicht dehnungsbelastende Hängeschlaufe der Folienbahn vermieden, wobei durch einfache, den Fördertakt der Tiefziehmaschine aber exakt übertragende mechanische Mittel der Synchronlauf der beiden miteinander zwangsgekoppelten Vorheizwalzen gewährleistet. Das linear vom Transportelement (Folienbahnförderzange) bewegbare Antriebsglied wirkt dabei nicht direkt auf die Heizwalzen, sondern auf eine von der Programmsteuerung der Tiefziehmaschine ausschaltbare Kupplung, die beim Vorschub der Folienbahn eingekuppelt wird und die beiden Heizwalzen in Vorschubdrehrichtung mitnimmt. Die ebenfalls mit der Programmsteuerung in Verbindung stehende Bremse wird bei Vorschubende und Entkupplung der Kupplung betätigt, um einen Trägheitsweiterlauf der beiden Heizwalzen und damit der Folienbahn zu verhindern. Während des Tiefziehtaktes fährt das Antriebsglied, vom sich zurückstellenden Folienbahn-Transportelement bewirkt, zurück, die Bremse wird gelöst und gleichzeitig die Kupplung wieder eingerückt, und die Heizwalzen werden wieder in Gang gesetzt.

Um die Oberflächen der beiden Heizwalzen so weit wie möglich auszunutzen und die Folienbahn möglichst über die ganze Umfangsfläche der beiden Vorheizwalzen führen und diese raumsparend direkt der Förderebene der Folienbahn in der Tiefziehmaschine zuordnen zu können, sind in den Zwickeln zwischen den beiden Heizwalzen, die Folienbahndurchlaufebene jeweils von der entgegengesetzten Seite tangierend, antriebslose Folienbandführungsrollen angeordnet, d.h., die Folienbahn läuft von der Vorratsrolle in der Förderbahnebene in die Vorheizeinrichtung ein und auch in dieser Ebene auf der anderen Seite unmittelbar in die Förderebene der sich anschließenden eigentlichen Tiefziehmaschine, womit jegliche Gefahr einer Zwischenabkühlung der vorgewärmten Folienbahn vermieden ist, was absolut im Sinne einer Temperaturkonstantshaltung des erreichten Vorwärmzustandes liegt.

Der erforderliche Bewegungsumsetzer ist vorteilhaft in Form einer als Schlaufe um den ankuppelbaren Teil der Kupplung gelegten Kette ausgebildet, die, von zwei am Maschinengestellbereich des linear bewegbaren Antriebsgliedes angeordneten Kettenritzeln geführt, mit ihren entgegengesetzt gerichteten Enden am Antriebsglied befestigt ist. Die Kupplung ist dabei an der Welle der unteren und die Bremse an der Welle der oberen Heizwalze angeordnet. Die Umsetzung der linearen Bewegung des Antriebsgliedes in eine Drehbewegung der Heizwalzen kann auf diese Weise vorteilhaft ebenfalls auf engstem Raum bewirkt werden. Das geradlinig bewegbare Antriebsglied ist dabei in Form einer Schubstange ausgebildet, die mit ihrem heizwalzenfernen Ende gelenkig mit dem einen Arm eines am Maschinengestell angelenkten Schwenkhebels und dieser mit seinem anderen Arm mit dem getaktet beweglichen Folienbandtransportelement gekoppelt ist. Für den als Kette ausgebildeten Bewegungsumsetzer ist an der Kupplung ein Kettenritzel vorgesehen, das als ankuppelbares Teil der Kupplung drehbar, aber axial fixiert ist, wobei das andere Teil der Kupplung drehfest, aber axial gegen das Kettenritzel verstellbar, auf der Welle der unteren Heizwalze sitzt.

Da sich das Ende des Schwenkhebels auf einem Kreisbogen bewegt und eine Einstellbarkeit in diesem Bewegungsübertragungsbereich wünschenswert ist, ist das heizwalzenferne Ende der Schubstange mit einer Pleuelstange am Schwenkhebel angelenkt, die selbst einstellbar mit dem Ende des Schwenkhebels verbunden ist. Um eine exakte und spiel freie Bewegungsübertragung durch den als Kette ausgebildeten Bewegungsumsetzer auf die Heizwalzen zu gewährleisten, ist die Kette vorteilhaft mit einem ihrer Enden an einem an der Schubstange sitzenden Kettenspanner befestigt.

Um die Heizwalzen einerseits so kompakt wie möglich bezüglich ihrer Lagerung anordnen zu können, andererseits dabei auch eine leichte Zugänglichkeit für das Einfädeln der Folienbahn zu schaffen, sind die Heizwalzen vorteilhaft mit ihren Wellen und die Folienbanführungsrollen, von denen mindestens die folienbahnablaufseitige Führungsrolle auch beheizbar ausgebildet sein kann, einseitig in einem seitlich neben den Heizwalzen angeordneten Lagergehäuse gelagert. Kupplung und Bremse sind dabei zwischen dem Gehäuse und den Heizwalzen angeordnet und können während der Einfädelung entkuppelt bzw. gelöst sein, um ein leichtes Durchziehen der Folie nach dem Einfädeln zu ermöglichen. Ebenfalls auf dieser Seite der Heizwalze befinden sich die beiden Zahnkränze, welche miteinander im Eingriff stehen, und die natürlich ebenfalls den gleichen Durchmesser bzw. die gleiche Zähnezahl aufweisen, da sich die beiden Heizwalzen konform zum Vorschub der Folienbahn bewegen müssen.

Die Beheizung der beiden Vorheizwalzen erfolgt bevorzugt elektrisch, zumal auf diese Weise die notwendige Heizenergie am einfachsten und ebenfalls raumsparend in die sehr kompakte Folienbahnvorwärmeinrichtung eingeführt werden kann, nämlich bevorzugt derart, dar die Wellen der Heizwalzen als Hohlwellen ausgebildet und am Lagergehäuse an den an diesen herausragenden Wellenenden Schleifringabnehmer angeordnet sind, von denen aus Kabel durch die Hohlwellen zu elektrischen Heizelementen in den Heizwalzen geführt sind.

Die erfindungsgemäße Tiefziehmaschine mit der folienbahneinlaufseitigen Vorwärmvorrichtung wird nachfolgend anhand der zeichnerischen Darstellung von Ausführungsbeispielen näher erläutert.

Es zeigt:
- Fig. 1: eine Tiefziehmaschine in Seitenansicht mit der der vorgeschalteten und zugehörigen Folienbahnvorwärmeinrichtung und den wesentlichen Elementen zur Übertragung der Folienbahnvorschubbewegung auf die Vorwärmwalzen;
- Fig. 2: vergrößert und ebenfalls in Seitenansicht die Vorwärmrichtung mit ihren Bewegungselementen;
- Fig. 3: einen Schnitt durch die Heizwalzen längs Linie III-III in Fig. 2 und
- Fig. 4: in Seitenansicht und teilweise im Schnitt das neben den Heizwalzen angeordnete Lagergehäuse.

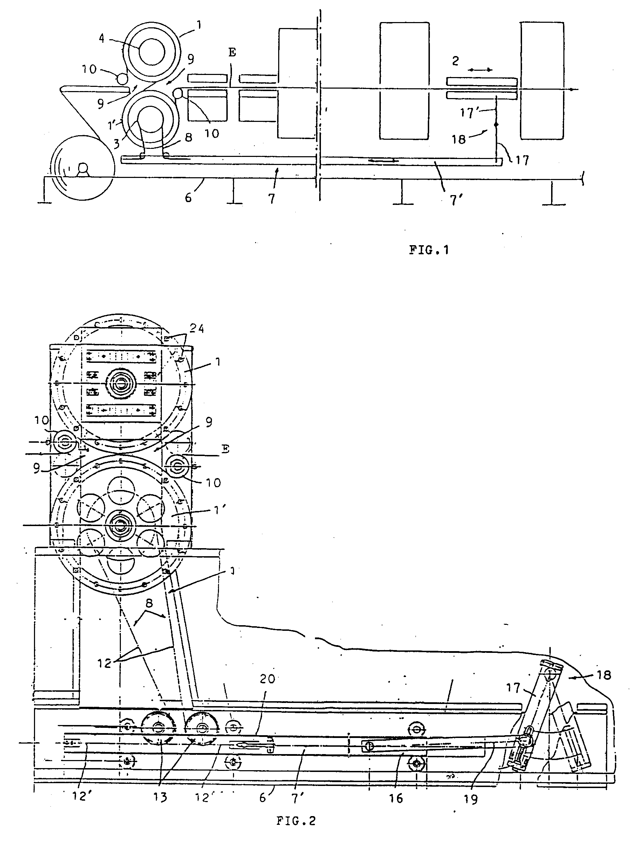

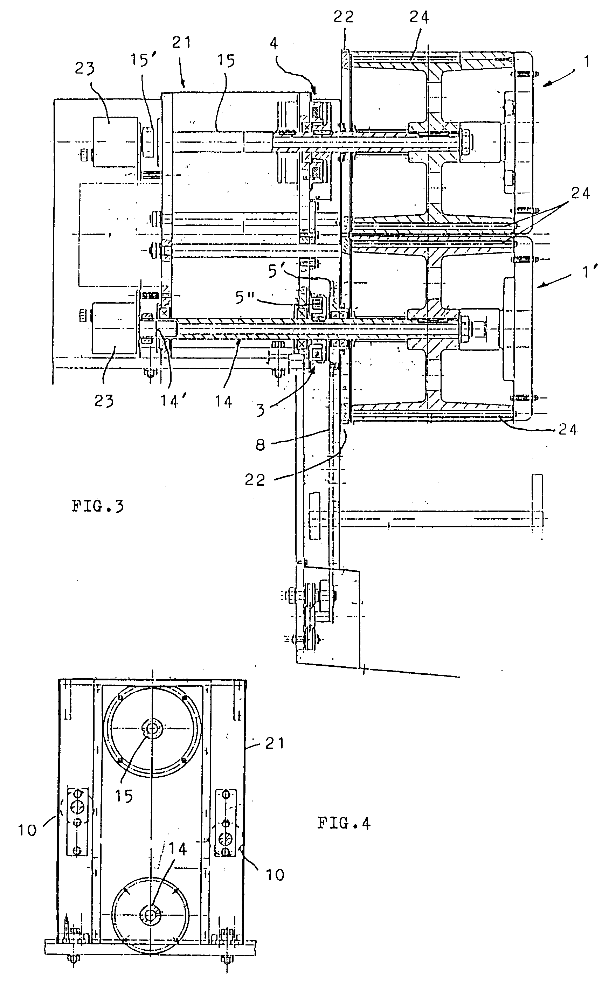

Die Tiefziehmaschine, die insbesondere für die Verarbeitung von ausreichend vorwärmbedürftiger Polypropylenfolie bestimmt ist, weist, wie aus Fig. 1 ersichtlich, eine folienbandeinlaufseitige Vorwärmvorrichtung auf, die aus übereinander angeordneten Heizwalzen 1 besteht, deren Drehantrieb synchron auf das getaktete Transportelement 2 der Folienbahn abgestimmt ist. Bei diesem Transportelement 2 handelt es sich um eine beidseitig längs der Folienbahnränder angeordnete Vorschubzange, mit der beim Vorschub die Ränder der Folienbahn erfaßt und damit die Folienbahn taktweise gefördert wird. Während des Tiefziehvorganges löst sich die Zange von den Rändern der Folienbahn und geht geöffnet wieder in die Ausgangsstellung zur Einlaufseite der Tiefziehmaschine hin zurück, wird dort wieder angelegt und fördert die Folienbahn nach Beendigung des Tiefziehvorganges wiederum einen Schritt weiter. Um diesen Bewegungsvorgang nun synchron getaktet und exakt auf die beiden Heizwalzen zu übertragen, ist wesentlich, dar die beiden übereinander angeordneten, bezüglich ihrer entgegengesetzten Drehrichtung miteinander zwangsgekoppelten Heizwalzen 1, 1′ mit einer im Folienbandfördertakt schaltbaren Kupplung 3 und Bremse 4 versehen sind, die von der Programmsteuerung der Maschine, die hier keiner besonderen Erläuterung bedarf, wie vorerwähnt getaktet betätigt werden. Zwischen dem an der Heizwalze 1′ ankuppelbaren Teil 5 der Kupplung 3 und dem geradlinig bewegbaren, am Maschinengestell 6 in geeigneter Weise gelagerten Antriebsglied 7, das mit dem Folienbahntransportelement 2 gekoppelt ist, ist ein sogenannter Bewegungsumsetzer angeordnet, der die lineare Bewegung des Antriebsgliedes 7 in eine Drehbewegung der Heizwalzen 1, 1′ umsetzt. Wie deutlicher aus Fig. 2 ersichtlich, sind in den Zwickeln 9 zwischen den beiden Heizwalzen 1, 1′, die Folienbahndurchlaufebene E jeweils von der entgegengesetzten Seite tangierend, antriebslose Folienbandführungsrollen 10 angeordnet. Der Bewegungsumsetzer 8 ist dabei in Form einer als Schlaufe 11 um den ankuppelbaren Teil 5 der Kupplung 3 gelegten Kette ausgebildet. Diese Kette wird, wie ebenfalls aus Fig. 2 ersichtlich, von zwei am Maschinengestell 6 im Bereich des geradlinig bewegbaren Antriebsgliedes 7 angeordneten Kettenritzeln 3 geführt, wobei die entgegengesetzt gerichteten Enden 12′, 12˝ am Antriebsglied 7 befestigt sind. Durch diese Befestigung der Kette 12 am als Schubstange 7′ ausgebildeten Antriebsglied 7 machen zwar beide Enden 12′, 12˝ der Kette 12 die Bewegung der Schubstange 7′ mit, wobei aber durch die stationär, aber drehbar am Maschinengestell angeordneten Kettenritzel 13 die als Schlaufe 11 um den ankuppelbaren Teil 5 der Kupplung 3 gelegten Kette dem als Kettenritzel 5′ ausgebildeten Teil 5 der Kupplung 3 eine der Vorschublänge entsprechende Drehung vermittelt wird. Das Ende 12˝ der Kette 12 ist dabei mit einem Kettenspanner 20 mit der Schubstange 7′ verbunden. Die Kupplung 3 ist, wie aus Fig. 3 ersichtlich, an der Welle 14 der unteren Heizwalze 1′ und die Bremse 4 an der Welle 15 der oberen Heizwalze 1 angeordnet.

Wie ebenfalls in Fig. 3 dargestellt, ist das ankuppelbare, als Kettenritzel 5′ ausgebildete Teil 5 der Kupplung 3 drehbar, aber axial fixiert und das andere Teil 5˝ der Kupplung 3 drehfest, aber axial gegen das Kettenritzel 5′ verstellbar auf der Welle 14 der Heizwalze 1′ angeordnet. Da das Kettenritzel 5′ drehbar auf der Welle 14 gelagert ist, kann also die Heizwalze 1′ nur mitgenommen werden, wenn die Kupplung 3 an das Kettenritzel 5′ angelegt ist. Für die entsprechende Mitnahme der anderen Heizwalze 1 in entgegengesetzter Drehrichtung sorgen zwei durchmessergleiche Zahnkränze 22 an den Heizwalzen 1, 1′, die miteinander kämmen. Auf diese Weise bzw. durch die beiden miteinander kämmenden Zahnkränze 22 überträgt sich auch umgekehrt die Wirkung der ebenfalls kupplungsartig ausgebildeten Bremse 4 auf der Welle 15 der oberen Heizwalze 1 auf die untere Heizwalze 1′.

Das geradlinig bewegbare, in Form einer Schubstange 7′ ausgebildete Antriebsglied 7 ist mit seinem heizwalzenfernen Ende 16 gelenkig mit dem einen Arm 17 des am Maschinengestell 6 angelenkten Schwenkhebels 18 verbunden, der mit seinem anderen Ende 17′ (siehe Fig. 1) mit dem getaktet beweglichen Folienbahntransportelement 2 gekoppelt ist. Zweckmäßig ist dabei das heizwalzenferne Ende 16 der Schubstange 7′ mit einer Pleuelstange 19 am Schwenkhebel 18 angelenkt, wobei diese Anlenkung der Pleuelstange 19 vorteilhaft einstellbar ausgebildet ist.

Die beiden Heizwalzen 1, 1′ sind mit ihren Wellen 14, 15 und auch die Folienbandführungsrollen 10 mit ihren Wellen einseitig in einem seitlich neben den Heizwalzen 1, 1′ angeordneten Lagergehäuse 21 (siehe Fig. 3, 4) gelagert, wobei die Kupplung 3 und die Bremse 4 zwischen dem Gehäuse 21 und den Heizwalzen 1, 1′ angeordnet sind.

Um bei dieser kompakten und raumsparenden Anordnung die notwendige Heizenergie in die elektrischen Heizelemente 24 einleiten zu können, die als Heizstäbe gleichmäßig auf dem Umfang der beiden Heizwalzen 1, 1′ verteilt angeordnet sind, einleiten zu können, sind die Wellen 14, 15 der Heizwalzen 1, 1′ als Hohlwellen ausgebildet, wobei am Lagergehäuse 21 an den aus diesem herausragenden Wellenenden 14′, 15′ Schleifringabnehmer 23 bekannter Bauart angeordnet sind, von denen aus Kabel (nicht dargestellt) durch die Hohlwellen zu den elektrischen Heizelementen 24 führen.

Durch die einseitige Lagerung der beiden Heizwalzen 1, 1′ am Lagergehäuse 21 und die Anordnung der Bewegungsübertragungselemente zwischen Lagergehäuse 21 und Heizwalzen 1, 1′, wie dargestellt, bleibt die andere Seite der beiden Heizwalzen 1, 1′ völlig frei, so daß von dieser Seite her die Folienbahn sehr bequem in die ganze Vorwärmvorrichtung eingefädelt werden kann, deren Heizwalzen 1, 1′ vom eingefädelten Folienband, wie aus Fig. 1 ersichtlich, S-förmig umschlungen werden. Die keinerlei zusätzlichen Raum beanspruchende Anordnung der beiden Führungsrollen 10 in den Zwickeln 9 sorgen dabei für eine nahezu ganzflächige Umschlingung der beiden Heizwalzen 1, 1′, wobei der Einlauf der Folienbahn in die Vorwärmvorrichtung und auch deren Aus lauf vorteilhaft in der Förderebene E der Tiefziehmaschine erfolgen, d.h., das vorgewärmte Folienband läuft unmittelbar und direkt in die Tiefziehmaschine ein, die im einzelnen keiner näheren Erläuterung bedarf, da derartige Maschinen hinlänglich bekannt sind.

Da die Maschine auch für Folien benutzbar sein soll, die einen geringeren Wärmebedarf haben und nicht über die Vorheizwalzen 1, 1′ laufen müssen, hat die bevorzugte Anordnung der Heizwalzen unmittelbar unter und über der Förderebene E auch den Vorteil, daß solche Folien direkt durch den Walzenspalt, d.h., ohne Umschlingung der Walzen in die Tiefziehmaschine einlaufen kann, ohne daß es dazu einer Maschinenumstellung bedarf. Heizung und Bewegungsumsetzer bleiben dann einfach ausgeschaltet.

Die beiden Heizwalzen sind vorteilhaft mit einer in bezug auf das Folienmaterial haftmindernden Beschichtung versehen, um ein "Wachsen" der Folienbahn während der Vorwärmung zu ermöglichen.

## Patentansprüche

1. Tiefziehmaschine mit einer folienbahneinlaufseitigen Vorwärmvorrichtung aus übereinander angeordneten, durchmessergleichen Heizwalzen (1), deren Drehantrieb synchron auf das getaktete Transportelement (2) der Folienbahn abgestimmt ist,
**dadurch gekennzeichnet,**
daß die beiden übereinander angeordneten, bezüglich ihrer entgegengesetzten Drehrichtung miteinander zwangsgekoppelten Heizwalzen (1, 1′) mit einer im Folienbahnfördertakt schaltbaren Kupplung (3) und Bremse (4) versehen sind,
daß zwischen dem an die Heizwalze (1, 1′) ankuppelbaren Teil (5) der Kupplung (3) und einem geradlinig bewegbaren, am Maschinengestell (6) gelagerten Antriebsglied (7), das mit dem Folienbahntransportelement (2) gekoppelt ist, ein Bewegungsumsetzer (8) angeordnet ist, und
daß in den Zwickeln (9) zwischen den beiden Heizwalzen (1, 1′) die Folienbahndurchlaufebene (E) jeweils von der entgegengesetzten Seite tangierend, antriebslose Folienbahnführungsrollen (10) angeordnet sind.

2. Maschine nach Anspruch 1,
**dadurch gekennzeichnet,**
daß der Bewegungsumsetzer (8) in Form einer als Schlaufe (11) um den ankuppelbaren Teil (5) der Kupplung (3) gelegten Kette (12) ausgebildet ist, die, von zwei am Maschinengestell (6) im Bereich des geradlinig bewegbaren Antriebsgliedes (7) angeordneten Kettenritzeln (13) geführt, mit ihren entgegengesetzt gerichteten Enden (12′, 12˝) am Antriebsglied (7) befestigt ist.

3. Maschine nach Anspruch 1 oder 2,
**dadurch gekennzeichnet,**
daß die Kupplung (3) an der Welle (14) der unteren Heizwalze (1′) und die Bremse (4) an der Welle (15) der oberen Heizwalze (1) angeordnet ist.

4. Maschine nach Anspruch 2 oder 3,
**dadurch gekennzeichnet,**
daß das ankuppelbare, als Kettenritzel (5′) ausgebildete Teil (5) der Kupplung (3) drehbar, aber axial fixiert und das andere Teil (5˝) der Kupplung (3) drehfest, aber axial gegen das Kettenritzel (5′) verstellbar auf der Welle (14) der Heizwalze (1′) angeordnet ist.

5. Maschine nach einem der Ansprüche 1 bis 4,
**dadurch gekennzeichnet,**
daß das geradlinig bewegbare Antriebsglied (7) in Form einer Schubstange (7′) ausgebildet ist, die mit ihrem heizwalzenfernen Ende (16) gelenkig mit dem einen Arm (17) eines am Maschinengestell (6) angelenkten Schwenkhebels (18) und dieser mit seinem anderen Arm (17′) mit dem getaktet beweglichen Folienbahntransportelement (2) gekoppelt ist.

6. Maschine nach Anspruch 5,
**dadurch gekennzeichnet,**
daß das heizwalzenferne Ende (16) der Schubstange (7′) mit einer Pleuelstange (14) am Schwenkhebel (18) angelenkt und an diesem die Pleuelstange (19) einstellbar angelenkt ist.

7. Maschine nach Anspruch 2 und 5,
**dadurch gekennzeichnet,**
daß die Kette (12) mit einem ihrer Enden (12˝) an einem der Schubstange (7′) sitzenden Kettenspanner (20) befestigt ist.

8. Maschine nach einem der Ansprüche 1 bis 7,
**dadurch gekennzeichnet,**
daß die Heizwalzen (1, 1′) mit ihren Wellen (14, 15) und die Folienbahnführungsrollen (10) einseitig in einem seitlich neben den Heizwalzen (1, 1′) angeordneten Lagergehäuse (21) gelagert und die Kupplung (3) und die Bremse (4) zwischen dem Gehäuse (21) und den Heizwalzen (1, 1′) angeordnet sind, die gehäuseseitig miteinander im Eingriff stehende Zahnkränze (22) aufweisen.

9. Maschine nach Anspruch 8,
**dadurch gekennzeichnet,**
daß die Wellen (14, 15) der Heizwalzen (1, 1′) als Hohlwellen ausgebildet und am Lagergehäuse (21) an den aus diesem herausragenden Wellenenden (14′, 15′) Schleifringabnehmer (23) angeordnet sind, von denen aus Kabel durch die Hohlwellen zu elektrischen Heizelementen (24) in den Heizwalzen (1, 1′) geführt sind.

10. Maschine nach einem der Ansprüche 1 bis 9,
**dadurch gekennzeichnet,**
daß mindestens die folienbahnablaufseitige Führungsrolle (10) beheizbar ausgebildet ist.

11. Maschine nach einem der Ansprüche 1 bis 10,
**dadurch gekennzeichnet,**
daß die Heizwalzen (1, 1′) auf ihrem Außenumfang mit einem in bezug auf das Folienmaterial reibungsminderndem und haftungsarmen Belag versehen sind.

12. Maschine nach einem der Ansprüche 1 bis 11,
**dadurch gekennzeichnet,**
daß die Mitte des Achsabstandes der beiden Heizwalzen (1, 1′) in der Foliendurchlaufebene (E) angeordnet ist.

## Claims

1. A deep-drawing machine including a preheater provided at the foil web inlet side and comprising superposed heating rollers (1) of identical diameters the rotary drive of which is adjusted in synchronism with the timed transporting element (2) of the foil web,
characterized in that the two superposed heating rollers (1,1') forced-coupled relative to the opposite direction of rotation thereof are provided with a clutch (3) engageable in accordance with the cycle at which the foil web is conveyed, and with a brake (4), that provided between part (5) of the clutch (3) connectible to the heating roller (1,1') and a linearly movable actuator member (7) arranged on machine frame (6) and coupled to the foil web transporting element (2) is a motion transformer (8), and that provided in the wedges (9) between the two heating rollers (1,1') are non-driven foil web guiding rollers (10) contacting the foil web passage plane (E) from the respectively opposite side.

2. A machine according to claim 1,
characterized in that the motion transformer (8) is formed as a chain (12) placed as a loop (11) about the engageable part (5) of the clutch (3), with the chain guided by two chain pinions (13) being located on the machine frame (6) in the area of the linearly movable drive member (7), and with the oppositely directed ends (12',12'') being fixed to the actuator member (7).

3. A machine according to claims 1 or 2,
characterized in that the clutch (3) is provided on the shaft (14) of the lower heating roller (1') while the brake (4) is located on the shaft (15) of the upper heating roller (1).

4. A machine according to claims 2 or 3,
characterized in that the engageable part (5) of the clutch (3) formed as a chain pinion (5') is rotable yet axially fixed and the other part (5'') of the clutch (3) is non-rotatable yet displaceable against the chain pinion (5') on the shaft (14) of the heating roller (1').

5. A machine according to any one of claims 1 to 4,
characterized in that the linearly movable actuator member (7) is in the form of a push rod (7') which with the end (16) thereof facing away from the heating roller is pivotally coupled to the one arm (17) of a swivel lever (18) hinged to the machine frame (6), and that the swivel lever with the other arm (17') thereof is coupled to the cyclically movable foil web transporting element (2).

6. A machine according to claim 5,
characterized in that the end (16) of the push rod (7') facing away from the heating roller with a connecting rod (14) is hinged to the swivel lever (18) and that the connecting rod (19) is adjustably articulated thereto.

7. A machine according to claims 2 to 5,
characterized in that the chain (12) with one of the ends (12'') therof is fixed to a chain tensioner (20) seated on the push rod (7').

8. A machine according to any one of claims 1 to 7,
characterized in that the heating rollers (1,1') with the shafts (14,15) thereof and the foil web guiding rollers (10) are one-sidedly arranged within a bearing housing (21) laterally provided next to the heating rollers (1,1'), and that the clutch (3) and the brake (4) are located between the housing (21) and the heating rollers (1,1') which on the housing side are provided with engaging gear rims (22).

9. A machine according to claim 8,
characterized in that the shafts (14,15) of the heating rollers (1,1') are formed as hollow rollers and that slip ring collectors (23) are provided on the bearing housing (21) at the shaft ends (14',15') protruding therefrom, with cables being led from the said slip ring collectors through the hollow shafts to electrical heating elements (24) in the heating rollers (1,1').

10. A machine according to any one of claims 1 to 9,
characterized in that at least the guiding roller (10) located on the side of the foil web outlet is of a heatable design.

11. A machine according to any one of claims 1 to 10,
characterized in that the heating rollers (1,1') on the outer periphery thereof are provided with a coating which relative to the foil material reduces friction and is little adhesive.

12. A machine according to any one of claims 1 to 11,
characterized in that the center of the axial distance of the two heating rollers (1,1') is located in the foil passage plane (E).

## Revendications

1. Machine à emboutissage profond avec un dispositif de préchauffage situé du côté entrée du film continu, lequel est constitué de cylindres chauffants (1) de même diamètre disposés l'un au-dessus de l'autre, dont l'entraînement en rotation est synchronisé avec l'élément de transport cyclique (2) du film continu, caractérisée en ce que les deux cylindres chauffants (1, 1') disposés l'un au-dessus de l'autre, qui, en ce qui concerne leur sens de rotation inverse, sont couplés entre eux de façon rigide, sont équipés d'un accouplement (3) enclenchable lors du cycle de transport du film continu et d'un frein (4), en ce qu'un convertisseur de mouvement (8) est disposé entre la partie (5) de l'accouplement (3) pouvant être couplée au cylindre chauffant (1, 1') et un élément d'entraînement (7) monté sur le bâti (6) de la machine pouvant être déplacé en ligne droite, ce dernier étant couplé à l'élément de transport (2) du film continu, et en ce que, dans les goussets (9) entre les cylindres chauffants (1, 1'), sont disposés des galets (10) de guidage du film continu, non entraînés, tangentant respectivement le côté opposé du plan de passage (E) du film continu.

2. Machine selon la revendication 1, caractérisée en ce que le convertisseur de mouvement (8) est conçu sous la forme d'une chaîne (12) disposée en tant que boucle (11) autour de la partie couplable (5) de l'accouplement (3), laquelle, guidée par deux pignons de chaîne (13) disposés sur le bâti (6) de la machine au niveau de l'élément d'entraînement (7) pouvant être déplacé en ligne droite, est fixée sur l'élément d'entraînement (7) par ses deux extrémités (12', 12'') orientées en sens inverse.

3. Machine selon la revendication 1 ou 2, caractérisée en ce que l'accouplement (3) est disposé sur l'arbre (14) du cylindre chauffant inférieur (1') et le frein (4) sur l'arbre (15) du cylindre chauffant supérieur (1).

4. Machine selon la revendication 2 ou 3, caractérisée en ce que la partie couplable (5) de l'accouplement (3) conçue en tant que pignon de chaîne (5') est disposée sur l'arbre (14) du cylindre chauffant (1') de façon à pouvoir pivoter, tout en étant axialement fixée, et que l'autre partie (5'') de l'accouplement (3) est, elle, disposée en fixe tout en pouvant être axialement déplacée contre le pignon de chaîne (5').

5. Machine selon l'une quelconque des revendications 1 à 4, caractérisée en ce que l'élément d'entraînement (7) pouvant être déplacé en ligne droite est conçu sous la forme d'une barre de poussée (7') qui, par son extrémité (16) opposée aux cylindres chauffants, est couplée de façon articulée à l'un des bras (17) d'un levier pivotant (18) qui est articulé au bâti (6) de la machine, et en ce qu'avec son autre bras (17'), ce dernier est couplé à l'élément de transport cyclique et mobile (2) du film continu.

6. Machine selon la revendication 5, caractérisée en ce que l'extrémité (16) opposée aux cylindres chauffants de la barre de poussée (7') est articulée avec une bielle (14) au levier pivotant (18), et en ce que la bielle (19) est articulée de façon réglable à ce dernier.

7. Machine selon l'une des revendications 2 et 5, caractérisée en ce que la chaîne (12) est fixée par l'une de ses extrémités (12'') à un tendeur de chaîne (20) disposé sur la barre de poussée (7').

8. Machine selon l'une quelconque des revendications 1 à 7, caractérisée en ce que les cylindres chauffants (1, 1') avec leurs arbres (14, 15) et les galets (10) de guidage du film continu, sont logés dans un carter de palier (21) disposé latéralement d'un seul côté des cylindres chauffants (1, 1'), et en ce que l'accouplement (3) et le frein (4) sont disposés entre le carter (21) et les cylindres chauffants (1, 1') qui comportent des couronnes dentées (22) s'engrènant du côté du carter.

9. Machine selon la revendication 8, caractérisée en ce que les arbres (14, 15) des cylindres chauffants (1, 1') sont conçus en tant qu'arbres creux, et en ce que des préleveurs à bagues collectrices (23) sont disposés sur les extrémités d'arbres (14', 15') dépassant du carter de palier (21), à partir desquels des câbles passant à travers les arbres creux conduisent vers des éléments chauffants électriques (24) se trouvant dans les cylindres chauffants (1, 1')

10. Machine selon l'une quelconque des revendications 1 à 9, caractérisée en ce qu'au moins le galet de guidage (10) se trouvant du côté de la sortie du film continu est conçu de façon à pouvoir être chauffé.

11. Machine selon l'une quelconque des revendications 1 à 10, caractérisée en ce que la circonférence extérieure des cylindres chauffants (1, 1') est munie d'un revêtement diminuant le frottement et de faible adhérence par rapport au matériau du film.

12. Machine selon l'une quelconque des revendications 1 à 11, caractérisée en ce que le milieu de l'entraxe des deux cylindres chauffants (1, 1') est disposé dans le plan de passage (E) du film.
